Europäisches Patentamt

European Patent Office

Office européen des brevets

(19)

(11)  EP 1 393 989 B1

(12)  EUROPEAN PATENT SPECIFICATION

(45) Date of publication and mention
of the grant of the patent:
**13.04.2005  Bulletin 2005/15**

(51) Int Cl.⁷: **B60R 21/16**

(86) International application number:
**PCT/ES2001/000225**

(21) Application number: **01936470.2**

(22) Date of filing: **01.06.2001**

(87) International publication number:
**WO 2002/096721 (05.12.2002 Gazette 2002/49)**

(54) **AIRBAG COMPRISING DISCHARGE OPENINGS DESIGNED FOR THE DIFFERENTIAL CONTROL OF THE DISCHARGE SURFACE AND THE BURST PRESSURE OF THE SEALING PATCH**

AIRBAG MIT ABFÜHRÖFFNUNGEN, DIE ZUR DIFFERENTIALSTEUERUNG DER ABFÜHRFLÄCHE UND DES BERSTDRUCKS DES DICHTUNGSAUFSATZES AUSGEFÜHRT SIND

AIRBAG EQUIPE D'ORIFICES D'EVACUATION D'AIR POUR REGULER DE FACON DIFFERENTIEE LA SURFACE D'EVACUATION D'AIR ET LA PRESSION DE RUPTURE DE LA PIECE D'OBTURATION

(84) Designated Contracting States:
**AT BE CH CY DE DK ES FI FR GB GR IE IT LI LU MC NL PT SE TR**
Designated Extension States:
**AL LT LV MK RO SI**

(43) Date of publication of application:
**03.03.2004  Bulletin 2004/10**

(73) Proprietor: **Dalphi Metal Espana, S.A.**
**28006 Madrid (ES)**

(72) Inventors:
• **PEREZ GARCIA, M Azucena**
**47151 Valladolid (ES)**
• **GOBERNADO MITRE, M Isabel**
**47151 Valladolid (ES)**
• **MERINO SENOVILLA, Juan Carlos**
**47151 Valladolid (ES)**

(74) Representative: **Elzaburu Marquez, Alberto et al**
**Elzaburu S.A.,**
**Miguel Angel, 21**
**28010 Madrid (ES)**

(56) References cited:
**EP-A- 0 423 981**      **EP-A- 1 022 198**
**WO-A-98/00313**       **US-A- 4 095 750**
**US-A- 5 533 753**

**Description**

Field of the invention

The present invention relates to the airbag modules that are used in motor vehicles to cushion the impacts suffered by drivers and passengers in the event of crashes or collisions.

Prior art

Airbag modules comprise frames within which is fixed a folded bag which inflates rapidly by means of a gas produced by a generator when certain specific sensors detect that the vehicle has been involved in a collision. In this manner, the bag deploys in front of the driver or a passenger, depending on its location, and prevents their bodies from impacting against any part of the vehicle.

In order to prevent the bag being very rigid when it comes into contact with the driver or passenger, acting as if it were a ball with the result that the rebound causes an excessive impact on the person upon whom it deploys, airbags have been provided with a venting aperture which serves to reduce the internal pressure of the bag and, consequently, the possibility of causing harm when it is activated.

Use has also been made of various means of sealing the gas discharge aperture in order to achieve better control of the internal pressure in the bag than is provided by simply varying the size of the aperture.

The effect of using a sealing patch is that the gas does not immediately escape through the discharge aperture but does so when the patch ruptures.

The prior art has proposed various types of patch with different means for controlling their rupturing, depending, to a greater or lesser extent, on a specific resistance to the pressure of the gas within the bag. In this way, compatibility is achieved between the presence of the gas pressure necessary for the bag to perform its protective function and the guarantee that the gas pressure will not reach an excessive level, jeopardizing those persons upon whom the bag deploys.

Fabric patches have been proposed, such as those described in patents US 3 879 057, US 4 097 065 and US 5 018 761, but these have not been successful owing to the lack of uniformity of their bursting pressure as a consequence of their nature.

Plastic patches, such as those proposed in US Patent 3 573 885, have also been unsuccessful, owing to the difficulty of controlling their bursting pressure because of the variability of the mechanical properties of plastics at different temperatures.

In this context, it is believed at present that silicone patches are the most appropriate, because of the good stability of the material to changes in temperature. They are used in conjunction with circular gas outlet apertures and rupture under a predetermined pressure as a result of deformation of the material or as a result of the presence of planned rupturing lines; this makes it possible to regulate the internal pressure in the bag with a view to optimizing its properties of restraining the vehicle occupant at whom the bag is directed. A good example of this is the one described in patent EP 1 022 198 which discloses an airbag according to the preamble of claim 1.

The disadvantage of these patches is that the size of the circular apertures which is necessary to meet the requirements of venting makes them liable to rupture as a result of friction during the deployment of the bag, before performing the intended function.

Another disadvantage is that, on deforming during their inflation, they may interact with some component of the vehicle which causes them to rupture before performing the intended function.

Summary of the invention

It is an object of the present invention to provide an airbag having a venting system wherein not only does the airbag come into operation at the necessary time, avoiding the losses of gas that occur if no sealing patch is used or if the sealing patch ruptures prematurely, but also, once the ventilation aperture is open, its surface area is sufficient to release the quantity of gas necessary in order to optimize the restraining function of the bag.

This object is achieved by means of apertures shaped so as to satisfy two conditions:

    (a) that the venting surface area after the rupture of the patch is greater than the surface area of the aperture; and

    (b) that the shape of the aperture makes it possible, with patches of the same material and of the same thickness, to modify their bursting pressure by varying at least one of the internal dimensions of the aperture.

The patches may be produced from any material whose mechanical properties do not undergo any changes in the various ambient conditions affecting an airbag module, and preferably from silicone.

Assuming that identical material is used for the sealing patch, in the case of circular apertures, coincidence exists between the critical dimension of the venting surface area and the critical dimension of the deformation of the patch, but in the case of the apertures according to the present invention these two dimensions are different, the former being substantially greater than the latter. This assumes that, in the case of an airbag with a circular venting aperture of a particular dimension, a similar venting capacity can be obtained with an aperture of much smaller sealed surface area and, consequently, with a much reduced risk of premature rupture caused by friction against any component of the vehicle.

Other features and advantages of the present invention will be apparent from the detailed description that follows of an illustrative embodiment, which is in no sense limiting, of the subject matter thereof, with reference to the accompanying drawings.

Description of the figures

Figure 1a is a diagrammatic view of an airbag known from the prior art, and Figure 1b is a sectional view of the venting aperture thereof, sealed by a patch.

Figure 2a is a plan view of an H-shaped aperture according to the invention, in which the most significant dimensions of the aperture have been inserted. Figure 2b is a diagrammatic view of a bag of an airbag module with an H-shaped aperture.

Figure 2c is a diagrammatic view of the venting surface area following the rupture of the patch.

Figures 3 and 4 show alternative configurations, cruciform and C-shaped, of the venting aperture.

Detailed description of the invention

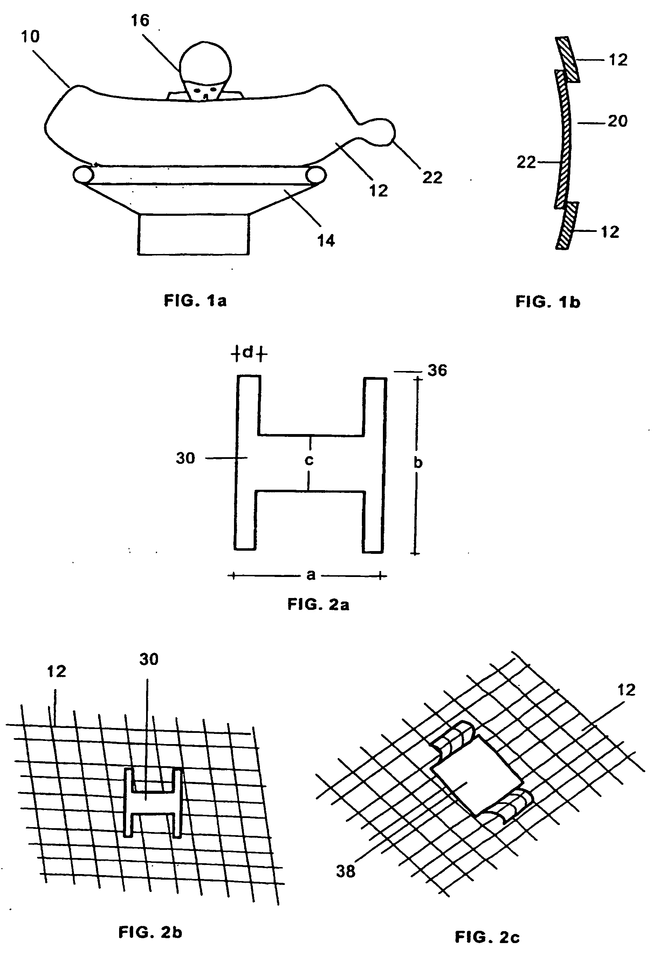

Figures 1a and 1b show an airbag module 10 known from the prior art whose bag 12 deploys from the steering wheel 14 towards the driver 16 of the vehicle, restraining him in his position to prevent him from striking against the steering wheel. To prevent the impact of the bag 12 on the driver 16 from being harmful, the bag comprises the venting system formed by the aperture 20 and a sealing patch 22 made, for example, from silicone. As is shown, in particular, in Figure 1a, the patch 22 is deformed and, when the time comes, ruptures, creating a venting aperture in the bag 12 which serves to avoid excessive pressure therein and to ensure the correct function of absorbing the shock of the impact.

In this system, the aperture 20 is circular, being larger or smaller depending upon whether a larger or smaller release of gas is required, and the patch 22 seals it completely, so that it customarily has the same circular shape as the aperture and is deformed over the entire surface area which seals the aperture.

According to the invention, and with reference to Figures 2a, 2b and 2c, the venting aperture 30 is H-shaped and is sealed by means of a patch which is joined to the bag by means of adhesive bonding, stitching or any other known technique which enables it to be secured before it is ruptured by pressure, which is produced in the manner shown diagrammatically in Figure 2c, creating a venting surface area 38.

With an H-shaped aperture, which can be produced by making the appropriate cuts in the fabric, a sealing surface area SO is thus obtained which is smaller than the venting surface area SV, and the risk that the sealing patch will rupture prematurely as a result of friction during its deployment is thereby reduced. With reference to Figure 2a, it can be seen that:

$$SV = a*b$$

$$SO = 2*b*d + c(a-2*d)$$

The smaller sealing surface area is also reflected by a smaller surface area of the deformable material and, consequently, a smaller volume of the inflated patch, which reduces the risk of premature rupture as a result of interaction with some component of the motor vehicle.

According to the tests carried out by the applicant, with H-shaped apertures in which the internal dimensions, in other words c and d, do not vary, it is possible to obtain (by varying the dimensions a and b) differences in the venting surface areas of the order of 1000 mm$^2$ without any pressure variation occurring in the opening pressure, using the same material.

In the case of the circular apertures of the prior art, the bursting pressure of the patch is basically determined by the physical properties of the material. Nevertheless, in the case of an H-shaped membrane, it proves to be possible, using patches of the same material and of the same thickness, to modify the opening pressure by modifying the shape of the H, in other words by varying its height. In this context, and according to the tests carried out by the applicant, it has been observed that, with a variation of 30% in the internal dimensions, a variation of the order of 80% in the opening pressure is achieved.

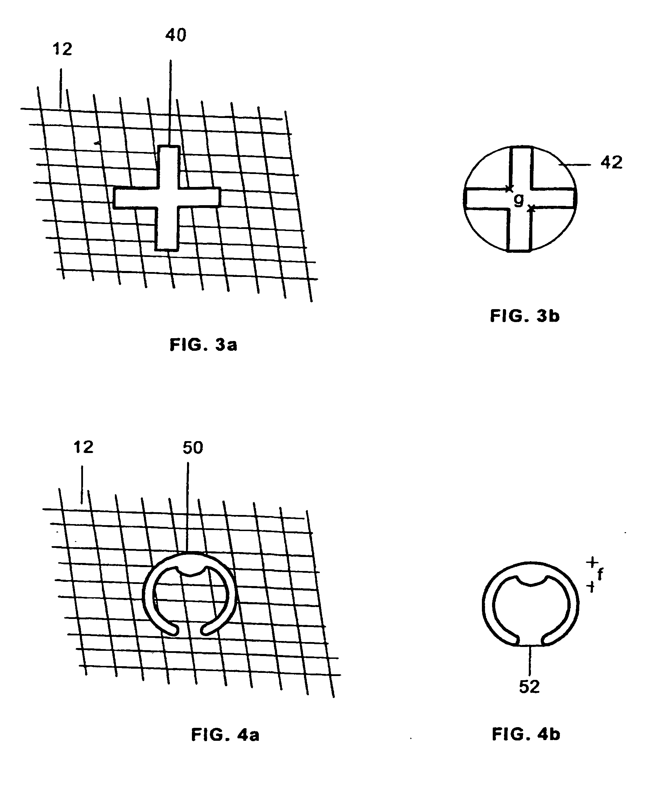

Figures 3 and 4 show C-shaped and cruciform apertures which also satisfy the two conditions specified above.

In the case of the cruciform aperture 40, the venting surface area would approximate to that defined by the line 42, which is larger than the surface area of the aperture. The bursting pressure, for its part, would basically depend on the interior diagonal of the cross g.

In the case of the C-shaped aperture 50, the venting surface area would approximate to that defined by its outer contour, continued by the line 52, which is larger than the surface area of the aperture. The bursting pressure, for its part, would basically depend on the width f of the section of the C in its upper portion.

Any other shape which satisfies the abovementioned conditions is also included within the scope of the present invention.

Although various embodiments of the invention have been described and illustrated, it is clear that modifications included within the scope of the said invention may be made thereto, the invention being considered as being confined not to the said embodiment but to the content of the claims that follow.

## Claims

1. Airbag having an inflatable bag (12) comprising a gas venting zone constituted by an aperture (30, 40, 50) made in the bag (12) and a sealing patch (22) designed to rupture under the effect of the internal pressure in the bag, **characterized in that** the aperture has a shape such that its surface area SO is less than the venting surface area SV produced after the rupture of the patch and which, for patches made from the same material, makes it possible to modify their bursting pressure by varying one of the internal dimensions of the aperture.

2. Airbag according to Claim 1, **characterized in that** the shape of the aperture makes it possible, for a predetermined bursting pressure, to increase the venting surface area by enlarging the external dimensions of the aperture and keeping at least one of the internal dimensions constant.

3. Airbag according to Claim 1 or 2, **characterized in that** the abovementioned aperture is of H-shaped configuration.

4. Airbag according to Claim 1 or 2, **characterized in that** the abovementioned aperture is of cruciform configuration.

5. Airbag according to Claim 1 or 2, **characterized in that** the abovementioned aperture is of C-shaped configuration.

6. Airbag according to any one of the preceding claims, **characterized in that** the sealing patch is made from silicone and has a constant thickness.

## Patentansprüche

1. Airbag mit einem aufblasbaren Schlauchkörper (12), mit einer Entgasungszone, die durch eine Öffnung (30, 40, 50) ausgebildet und in dem Schlauchkörper (12) bereitgestellt ist, und mit einem Verschlussaufsatz (22), welcher unter der Einwirkung eines Innendrucks im Schlauchkörper zum Auseinanderbrechen ausgelegt ist, **dadurch gekennzeichnet, dass** die Öffnung eine solche Form besitzt, dass deren Oberflächenbereich SO kleiner als der Entgasungsoberflächenbereich SV ist, der nach dem Auseinanderbrechen des Verschlussaufsatzes erzeugt wird, und die, da die Aufsätze aus dem gleichen Material hergestellt sind, es ermöglicht deren Berstdruck zu modifizieren, indem eine der Innendimensionen der Öffnung verändert wird.

2. Airbag gemäß Anspruch 1, **dadurch gekennzeichnet, dass** die Formgebung der Öffnung wegen eines vorgegebenen Berstdrucks es ermöglicht, den Entgasungsoberflächenbereich zu erhöhen, indem die äußeren Dimensionen der Öffnung vergrößert werden und mindestens eine der Innendimensionen konstant gehalten wird.

3. Airbag gemäß Anspruch 1 oder 2, **dadurch gekennzeichnet, dass** die vorstehend genannte Öffnung eine H-Formstruktur aufweist.

4. Airbag gemäß Anspruch 1 oder 2, **dadurch gekennzeichnet, dass** die vorstehend genannte Öffnung eine Kreuz-Formstruktur aufweist.

5. Airbag gemäß Anspruch 1 oder 2, **dadurch gekennzeichnet, dass** die vorstehend genannte Öffnung eine C-Formstruktur aufweist.

6. Airbag gemäß einem der voranstehenden Ansprüche, **dadurch gekennzeichnet, dass** der Verschlussaufsatz aus Silikon hergestellt ist und eine konstante Dicke aufweist.

## Revendications

1. Airbag comportant un coussin gonflable (12) comprenant une zone d'aération de gaz constituée par une ouverture (30, 40, 50) formée dans le coussin (12) et un bloc d'étanchéité (22) conçu pour se rompre sous l'effet de la pression à l'intérieur du coussin, **caractérisé en ce que** l'ouverture possède une forme telle que son étendue en surface SO est inférieure à l'étendue en surface d'aération SV produite après la rupture du bloc et qui, pour des blocs réalisés avec le même matériau, permet de modifier leur pression d'éclatement par modification de l'une des dimensions internes de l'ouverture.

2. Airbag selon la revendication 1, **caractérisé en ce que** la forme de l'ouverture permet, pour une pression d'éclatement prédéterminée, d'augmenter l'étendue en surface d'aération par augmentation des dimensions externes de l'ouverture et maintien d'au moins l'une des dimensions internes constante.

3. Airbag selon la revendication 1 ou 2, **caractérisé en ce que** l'ouverture mentionnée précédemment possède une configuration en forme de H.

4. Airbag selon la revendication 1 ou 2, **caractérisé**

**en ce que** l'ouverture mentionnée précédemment possède une configuration cruciforme.

5. Airbag selon la revendication 1 ou 2, **caractérisé en ce que** l'ouverture mentionnée précédemment possède une configuration en forme de C.

6. Airbag selon l'une quelconque des revendications précédentes, **caractérisé en ce que** le bloc d'étanchéité est formé de silicone et possède une épaisseur constante.

**FIG. 1a**

**FIG. 1b**

**FIG. 2a**

**FIG. 2b**

**FIG. 2c**

FIG. 3a

FIG. 3b

FIG. 4a

FIG. 4b